Europäisches Patentamt

European Patent Office

Office européen des brevets

(19)

(11) **EP 1 553 707 A1**

(12) **EUROPEAN PATENT APPLICATION**
published in accordance with Art. 158(3) EPC

(43) Date of publication:
**13.07.2005 Bulletin 2005/28**

(51) Int Cl.⁷: $H04B\ 1/707$, $H04B\ 7/26$

(21) Application number: **03808860.5**

(86) International application number:
**PCT/JP2003/010393**

(22) Date of filing: **18.08.2003**

(87) International publication number:
**WO 2004/036782 (29.04.2004 Gazette 2004/18)**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **16.10.2002 JP 2002301524**

(71) Applicant: **MATSUSHITA ELECTRIC INDUSTRIAL
CO., LTD.
Kadoma-shi, Osaka 571-8501 (JP)**

(72) Inventor: **ARIMA, Takenobu
Kanagawa 239-0847 (JP)**

(74) Representative: **Grünecker, Kinkeldey,
Stockmair & Schwanhäusser Anwaltssozietät
Maximilianstrasse 58
80538 München (DE)**

(54) **RADIO RECEPTION DEVICE AND SIR CALCULATION METHOD**

(57)     RSCP calculation sections 106a-160c calculate RSCP per path, using average signal powers. Multipliers 107a-107c multiply symbol power deviations per path and per slot by the RSCP per path, thereby weighting the deviations per path and per slot. A combining section 108 calculates a total RSCP by adding the RSCP values per path. Another combining section 109 calculates symbol power deviations per slot by adding the weighted symbol power deviations per path. An IS-CP calculation section 110 calculates symbol power variance values per slot, using the symbol power deviations per slot. An averaging section 111 calculates a total ISCP by averaging the symbol power variance values across multiple slots. An SIR calculation section 112 calculates SIR from the total RSCP and the total ISCP. SIR measurement before RAKE combining can be performed with as high accuracy as SIR measurement after RAKE combining.

FIG.3

EP 1 553 707 A1

**Description**

Technical Field

The present invention relates to a radio receiver apparatus and an SIR calculation method for use in a digital radio communications system.

Background Art

In Code Division Multiple Access (CDMA) that attracts attention as an access method for mobile communications systems, system capacity is restricted by the amount of interference that receiving stations may receive. To ensure sufficient system capacity, interference must be reduced, that is, the transmitting power of other stations must be reduced to as low as possible.
Therefore, transmitting power control (TPC), which increases or decreases transmitting power according to received signal quality, is an essential technique for CDMA. In the TPC, the ratio of desired reception signal power to interference power, that is, a Signal to Interference Ratio (SIR) is commonly used as a measure of received signal quality. In order to minimize interference that affects the system and to ensure sufficient system capacity, it is necessary to correctly measure the SIR of received signals for accurate transmitting power control.
Typically, conventional SIR measurement methods which have been deliberated are: SIR measurement after RAKE combining; and SIR measurement before RAKE combining. Either method takes SIR measurement, using known symbols included in received signals.
Specifically, in the SIR measurement method after RAKE combining, after RAKE combining of known symbols, using the RAKE combined signals, an average power of the known symbols is determined as desired signal power (RSCP: Received Signal Code Power). Variance of the RAKE combined symbols relative to the average symbol power is determined as interference signal power (ISCP: Interference Signal Code Power). The ratio of RSCP to ISCP is calculated as the SIR.
On the other hand, in the SIR measurement method before RAKE combining, using despread signal power of known symbols before RAKE combining, an average power of the despread signal power of known symbols and variance of the despread signal power relative to the average are determined for each path. The sum of the averages per path is obtained as desired signal power (RSCP) and an average of the variances per path is obtained as interference signal power (ISCP). The ratio of RSCP to ISCP is calculated as the SIR.
Using equations, the conventional SIR measurement method after RAKE combining will be explained below.
First, known symbols included in received signals are subjected to despreading, synchronous detection, and RAKE combining. Synchronous detection coefficients h[p].i and h[p].q can be obtained through quadrant compensation to despread signal power per symbol, as expressed by the following equations (1) and (2):

$$h[p].i = \frac{1}{N}\sum_{n=1}^{N} ref[n] \times x[n][p].q \qquad \text{Equation (1)}$$

$$h[p].q = \frac{1}{N}\sum_{n=1}^{N} \left(-1 \times ref[n] \times x[n][p].i\right) \qquad \text{Equation (2)}$$

RAKE combined known symbols Rx[n].i and Rx[n].q are obtained, using the following equations (3) and (4):

$$Rx[n].i = \sum_{p=1}^{P} \left(h[p].i \times x[n].i + h[p].q \times x[n].q\right) \qquad \text{Equation (3)}$$

$$Rx[n].q = \sum_{p=1}^{P} \left( -1 \times h[p].q \times x[n].i + h[p].i \times x[n].q \right)$$ Equation (4)

Then, RSCP is calculated. An RSCP measurement result per slot, which is denoted by rscp, can be obtained as an average power of the RAKE combined known symbols per slot, using the following equations (5) and (6):

$$rscp.i = \frac{1}{N} \sum_{n=1}^{N} ref[n] \times Rx[n].q$$ Equation (5)

$$rscp.q = \frac{1}{N} \sum_{n=1}^{N} \left( -1 \times ref[n] \times Rx[n].i \right)$$ Equation (6)

Thus the measurement result of RSCP is calculated by the following equation (7):

$$RSCP = rscp.i^2 + rscp.q^2$$ Equation (7)

Then, ISCP is measured. ISCP components iscp[n].i and iscp[n].q can be obtained from difference between each RAKE combined known symbol power and the average power of the symbols per slot, as expressed by the following equations (8)and (9):

$$iscp[n].i = ref[n] \times Rx[n].q - rscp.i$$ Equation (8)

$$iscp[n].q = -1 \times ref[n] \times Rx[n].i - rscp.q$$ Equation (9)

Thus, the power of ISCP measurement per slot is expressed by the following equation (10):

$$ISCP = \frac{1}{N} \sum_{n=1}^{N} \left( iscp[n].i^2 + iscp[n].q^2 \right)$$ Equation (10)

Finally, SIR is measured. SIR can be obtained from RSCP and ISCP obtained by the above equations, as expressed by the following equations (11) and (12):

$$SIR = \frac{RSCP}{ISCP}$$ Equation (11)

$$SIR_{dB} = 10 \times \log_{10}(SIR)$$ Equation (12)

Next, the conventional SIR measurement method before RAKE combining will be explained, using equations.
First, known symbols included in received signals are subjected to despreading and the thus despread known symbols are quad-compensated. The quad-compensated known symbols per path Sx[n][p].i and Sx[n][p].q (n = 1-N) are obtained, using the following equations (13) and (14):

$$Sx[n][p].i = ref[n] \times x[n][p].q \qquad \text{Equation (13)}$$

$$Sx[n][p].q = -1 \times ref[n] \times x[n][p].i \qquad \text{Equation (14)}$$

Then, RSCP is measured for the quad-compensated signals. Average powers rscp[p].i and rscp[p]q. of the quad-compensated known symbols are obtained, using the following equations (15) and (16):

$$rscp[p].i = \frac{1}{N} \sum_{n=1}^{N} Sx[n][p].i \qquad \text{Equation (15)}$$

$$rscp[p].q = \frac{1}{N} \sum_{n=1}^{N} Sx[n][p].q \qquad \text{Equation (16)}$$

RSCP per path is obtained, using the following equation (17):

$$rscp[p]^2 = rscp[p].i^2 + rscp[p].q^2 \qquad \text{Equation (17)}$$

A total RSCP is obtained by adding the thus measured RSCP values per path, as expressed by the following equation (18):

$$RSCP = \sum_{p=1}^{P} rscp[p]^2 \qquad \text{Equation (18)}$$

Meanwhile, ISCP components are obtained from difference between each quad-compensated known symbol power and the average power of the symbols per slot (RSCP per path). That is, ISCP components iscp[n][p].i and iscp[n][p].q can be obtained, using the following equations (19) and (20):

$$iscp[n][p].i = Sx[n][p].i - rscp[p].i \qquad \text{Equation (19)}$$

$$iscp[n][p].q = Sx[n][p].q - rscp[p].q \qquad \text{Equation (20)}$$

Then, ISCP per path is obtained by averaging the iscps across the multiple slots, as expressed by the following equation (21):

$$iscp[p] = \frac{1}{N} \sum_{n=1}^{N} \left( iscp[n][p].i^2 + iscp[n][p].q^2 \right) \qquad \text{Equation (21)}$$

Then, a total ISCP is obtained by adding ISCP values per path and dividing the resultant sum by the number of paths, as expressed by the following equation (22):

$$ISCP = \frac{1}{P}\sum_{p=1}^{P} iscp[p] \qquad\qquad \text{Equation (22)}$$

Finally, SIR is measured. SIR can be obtained by assigning the total RSCP and total ISCP to the above equations (11) and (12).

For a closed loop type of TPC based on SIR measurement, because delay from the SIR measurement until TPC command transmission results in performance degradation, the SIR measurement is required to be performed at a high speed.

In the SIR measurement method after RAKE combining, however, the equations (1) to (4) associated with the synchronous detection processing are required for RAKE combination in SIR measurement. This poses a problem that the processing load must increase in order to perform the SIR measurement at a high speed.

On the other hand, in the SIR measurement method before RAKE combining, the synchronous detection processing is not required for SIR measurement. However, a problem with this method is that the ISCP does not reflect the reliabilityof each path, because it is obtained simply by averaging the ISCPs of the paths (equation (22)).

In fact, for a path with a small RSCP, the reliability of assigning a RAKE finger to the path at a correct position is low in most cases. If the path position is off its correct position, SIR measurement may not yield a correct output. Moreover, the reliabilityof the SIRmeasurement itself is also low, because such a path is greatly affected by noise. SIR measurement for the paths including such a low reliable path or paths would be influenced by the low reliable path(s). As for the RSCP that is the sum of the RSCPs of the paths, this influence may be small, because of relatively small contribution of the low reliable path (s). However, for the ISCP that is obtained by averaging the ISCPs of the paths, the more the number of low reliable paths, probably, the measured ISCP will be greater than actual ISCP.

Consequently, a drawback may appear in the performance of a path search function for searching for path position from received signals or SIR measurement results (such as average offset or variance degree) which vary, depending on propagation path condition.

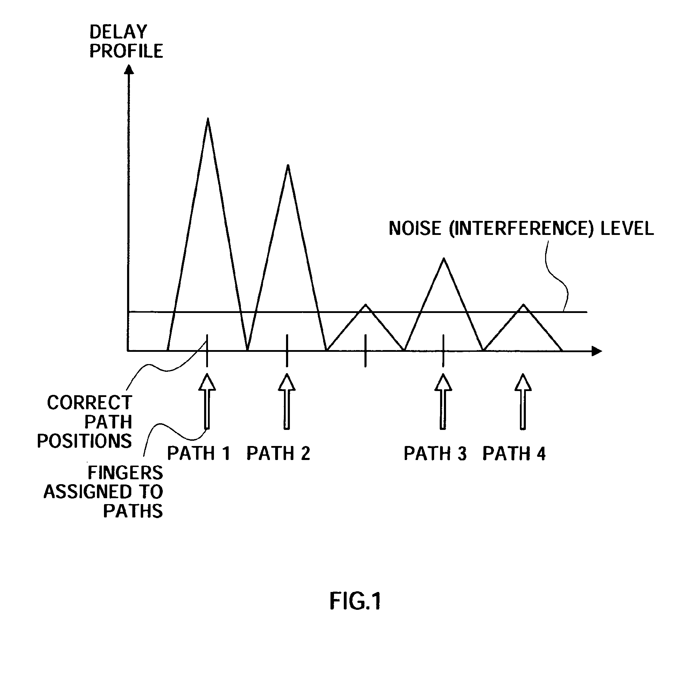

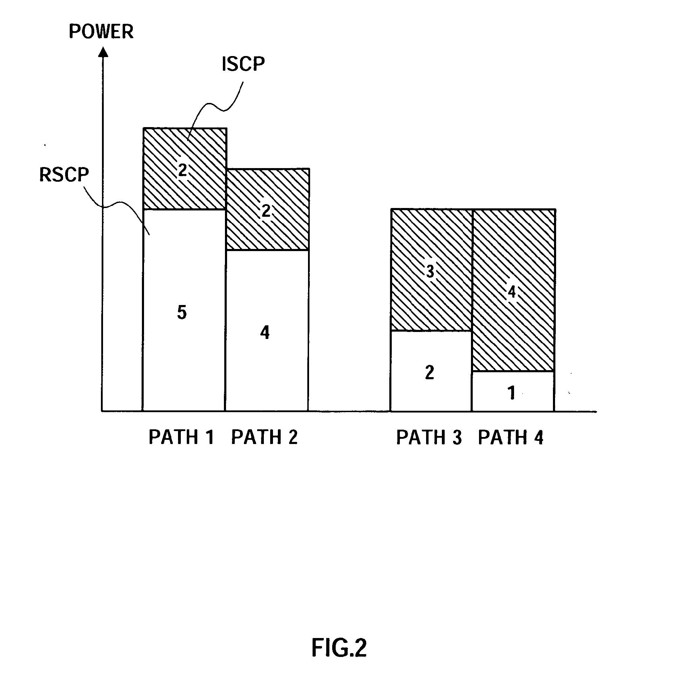

This problem will be explained in more depth. From the perspective of path search and RAKE finger assignment, an SIR measurement operation example will be discussed below. Assume that a delay profile is obtained like the one which is shown in FIG. 1, where a RAKE finger is assigned to path 4 off its correct position. Peaks appear in the delay profile due to some delay of a desired wave signal and external noise (interference) power is basically constant in the delay profile. In this state, RSCP and ISCP calculated for the paths are shown in FIG. 2.

For paths 1 and 2, the influence of the noise (interference signal) is small, because the RSCP (desired signal power) is sufficiently large, and the RSCP and ISCP are correctly measured. Here, the ISCP is assumed to be constant at a value of 2 in the delay profile.

To the contrary, paths 3 and 4 are greatly influenced by the interference signal because of small RSCP thereof. The values of ISCP measured for them become greater with large variation in ISCP measurements.

According to the conventional method, then, the ISCPs are averaged by dividing the ISCPS obtained per path by the number of paths. An average ISCP is obtained as follows:

$$ISCP = (2 + 2 + 3 + 4)/4$$
$$= 2.75$$

Notwithstanding that the ideal ISCP is 2, simply averaging the ISCPs of all the paths including the paths 3 and 4, for which RSCP is small and ISCP measurements are less reliable, yields a higher average ISCP.

For example, if a RAKE finger is assigned to a path at an incorrect position as above due to improper performance of the path search function for searching for path position from received signals or propagation path environment, the non-RSCP portion of the received signal power increases. As a result, difference between the measured ISCP and ideal ISCP becomes greater and a worse SIR than it truly is measured.

Furthermore, the performance of TPC that is performed, using such an incorrect SIRmeasurement result is also affected. Eventually, a significant TPC error increases the transmitting power more than the required to satisfy the signal quality. Consequently, this presents a problem that increases the interference impact on the radio communications system and decreases the system capacity.

Disclosure of Invention

An object of the present invention is to provide a radio receiver apparatus and an SIR calculation method whichmake it possible to carry out SIRmeasurements before RAKE combining with as high accuracy as SIR measurements that are obtained after RAKE combining, achieved by adding vectors of interference components.

This object is achieved by performing ISCP measurements in the SIR measurement process as follows: add the vectors of interference signal components on all paths before RAKE combining and then measure ISCP. Thus, the SIR measurement with as high accuracy as that after RAKE combining is effected.

Brief Description of Drawings

FIG. 1 is a delay profile graph.
FIG. 2 is a graph representing RSCP and ISCP calculated for multiple paths according to a prior art method.
FIG. 3 is a section diagram showing a radio receiver configuration according to a preferred embodiment of the present invention.
FIG. 4A shows RSCP and ISCP vectors on the I-Q plane for the multiple paths, calculated by the method of the above embodiment.
FIG. 4B shows RSCP and ISCP vectors on the I-Q plane for the multiple paths, calculated by the method of the above embodiment.
FIG. 5A shows RSCP and ISCP vectors on the I-Q plane for the multiple paths, calculated by the method of the above embodiment.
FIG. 5B shows RSCP and ISCP vectors on the I-Q plane for the multiple paths, calculated by the method of the above embodiment.

Best Mode for Carrying Out the Invention

The present inventors noted that, in the SIR measurement method before RAKE combining, which dispenses with the synchronous detection processing, suppressing interference signal components to be performed in the RAKE combining process is not taken into consideration. The inventors found that ISCP calculation can be executed accurately by adding the vectors of the interference signal components and developed this invention.

An essential feature of the present invention is adding the vectors of the interference signal components of the multiple paths before RAKE combining and then measuring interference power, when taking interference power measurements in the SIR measurement process. Thereby, the SIR measurement with as high accuracy as that after RAKE combining is effected.

The present invention will be described hereinafter in conjunction with a preferred embodiment thereof and with reference to its accompanying drawings.

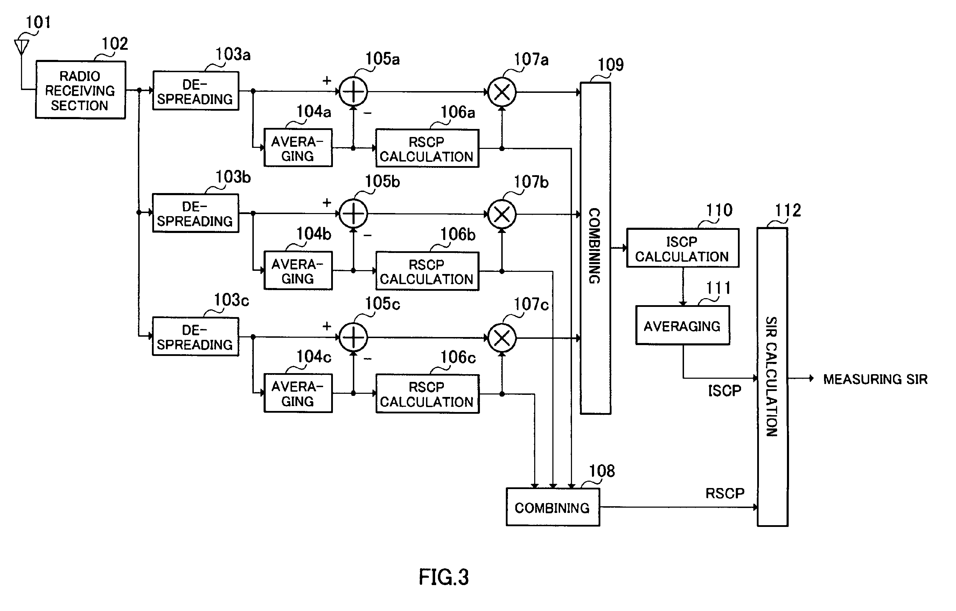

FIG. 3 is a section diagram showing a radio receiver configuration according to the preferred embodiment of the present invention. Although the receiver configuration shown in FIG. 3 has three paths, the number of components corresponding to the number of paths can be changed as appropriate, because no limitation is placed on the number of paths.

Radio signals transmitted from a transmitting end are received by a radio receiving section 102 through an antenna 101 . The radio receiving section 102 performs given radio receive processing (such as, for example, downconverting the signal and A/D conversion)for the received signals and outputs the thus converted signals to despreading sections 103a-103c.

The despreading sections 103a-103c perform despreading of the signals after radio receive processing, using a despreading code that was used at the transmitting end, execute quadrant compensation to the signals, and output the quad-compensated signals to corresponding averaging sections 104a-104c and corresponding subtractors 105a-105c.

The averaging sections 104a-104c average known symbols included in the quad-compensated signals across a plurality of slots and output it to the corresponding subtractors 105a-105c and corresponding RSCP calculation sections 106a-160c.

Each of the subtractors 105a-105c subtracts an average value of known symbol calculated by each of the averaging sections 104a-104c from the power of a known symbol per slot output from each of the despreading sections 103a-103c to obtain symbol power deviations per path and per slot. The subtractors 105a-105c output the symbol power deviations to corresponding multipliers 107a-107c.

The RSCP calculation sections 106a-160c calculate RSCP per path, using average symbol powers, and output RSCP values per path to the corresponding multipliers 107a-107c and a combining section 108.

Each of the multipliers 107a-107c multiplies the symbol power deviations per path and per slot input thereto by the RSCP per path input thereto, thereby weighting the deviations per path and per slot.

The combining section 108 calculates a total RSCP by adding the RSCP values per path and outputs the total RSCP to an SIR calculation section 112.

Another combining section 109 calculates symbol power deviations per slot by adding the weighted symbol power deviations per path and outputs the deviations per slot to an ISCP calculation section 110.

The ISCP calculation section 110 calculates symbol power variance values per slot, using the symbol power deviations per slot, and outputs the variance values to an averaging section 111.

The averaging section 111 calculates a total ISCP by averaging the symbol power variance values across the plurality of slots and outputs the total ISCP to the SIR calculation section 112.

The SIR calculation section 112 calculates SIR from the total RSCP and the total ISCP.

Then, the invented SIR measurement method before RAKE combining, which is performed by the radio receiver configured as described above, will be explained, using equations.

First, the radio signals received through the antenna 101 are converted by the given radio receive processing in the radio receiving section 102. Then, the despreading sections 103a-103c despread the converted signals and the despread known symbols are quad-compensated. The quad-compensated known symbols per path Sx[n] [p].i and Sx [n] [p].q (n = 1-N) are obtained from the aforementioned equations (13) and (14).

Then, the averaging sections 104a-104c average the quad-compensated known symbols into a symbol average power; average powers rscp[p].i and rscp[p]q. are obtained from the aforementioned equations (15) and (16). The RSCP calculation sections 106a-160c calculate RSCP per path from the aforementioned equation (17). The combining section 108 calculates the total RSCP by adding the RSCP measurements per path from the aforementioned equation (18).

Meanwhile, the subtractors 105a-105c calculate ISCP components iscp[n][p].i and iscp[n][p].q for a known symbol per path and per slot , using the following equation (23) :

$$iscp[n][p].i = Sx[n][p].i - rscp[p].i$$

$$iscp[n][p].q = Sx[n][p].q - rscp[p].q \hspace{3cm} \text{Equation (23)}$$

The multipliers 107a-107c weight the ISCP components iscp[n][p].i and iscp[n][p].q for a known symbol per path and per slot, using the following equation (w[n] denotes weight):

$$iscp\_w[n][p].i = \sqrt{rscp[p]} \times iscp[n][p].i$$

$$iscp\_w[n][p].q = \sqrt{rscp[p]} \times iscp[n][p].q \hspace{3cm} \text{Equation (24)}$$

The combining section 109 adds known symbol ISCP components per path and calculates known symbol ISCP components per symbol, using the following equation (25) :

$$iscp\_w[n].i = \sum_{p=1}^{P} iscp\_w[n][p].i$$

$$iscp\_w[n].q = \sum_{p=1}^{P} iscp\_w[n][p].q \hspace{3cm} \text{Equation (25)}$$

The ISCP calculation section 110 calculates known symbol ISCP per symbol, using the following equation (26) :

$$iscp[n] = iscp\_w[n]i^2 + iscp\_w[n].q^2 \qquad \text{Equation (26)}$$

The averaging section 111 calculates the total ISCP by averaging known symbol deviations per symbol across the slots, using the following equation (27):

$$ISCP = \frac{1}{N} \sum_{N=1}^{N} iscp[n] \qquad \text{Equation (27)}$$

Finally, the SIR calculation section 112 calculates SIR from the total RSCP and the total ISCP from the aforementioned equations (11) and (12).

The thus obtained SIR value is compared with a target SIR value and TPC bits are generated, based on the comparison result; in short, the so-called TPC is performed.

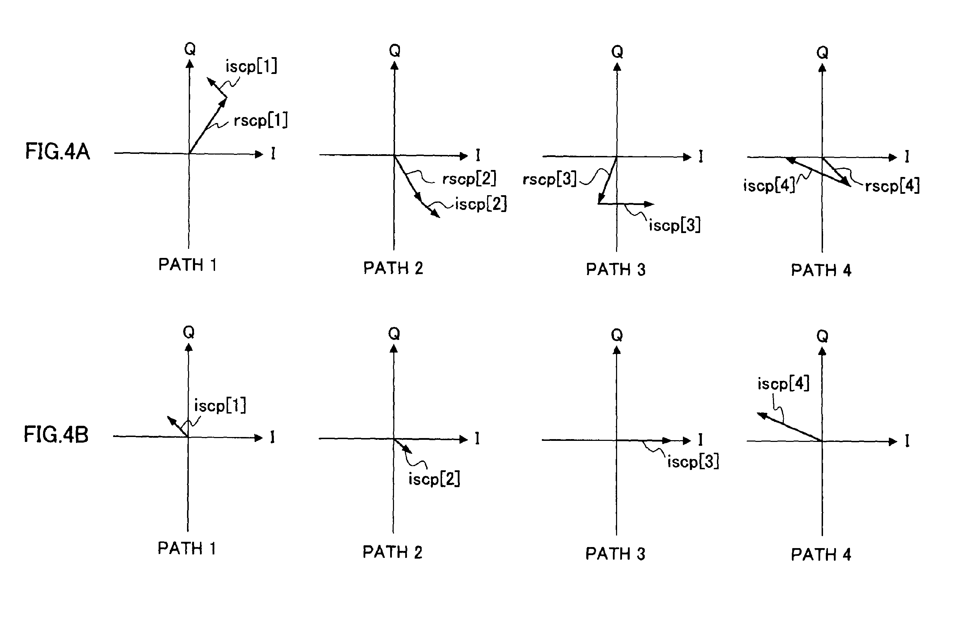

Next, ISCP that is calculated by the present embodiment will be explained concretely, using FIG. 4. FIGS. 4A and 4B show ISCP and RSCP vectors per path on the I-Q plane, calculated by the method of the present embodiment. FIG. 4A shows RSCP and ISCP vectors on the I-Q plane for the paths corresponding to the paths in the delay profile shown in the above FIG. 1. FIG. 4B shows ISCP vectors from the I-Q origin for the corresponding paths in FIG. 4A.

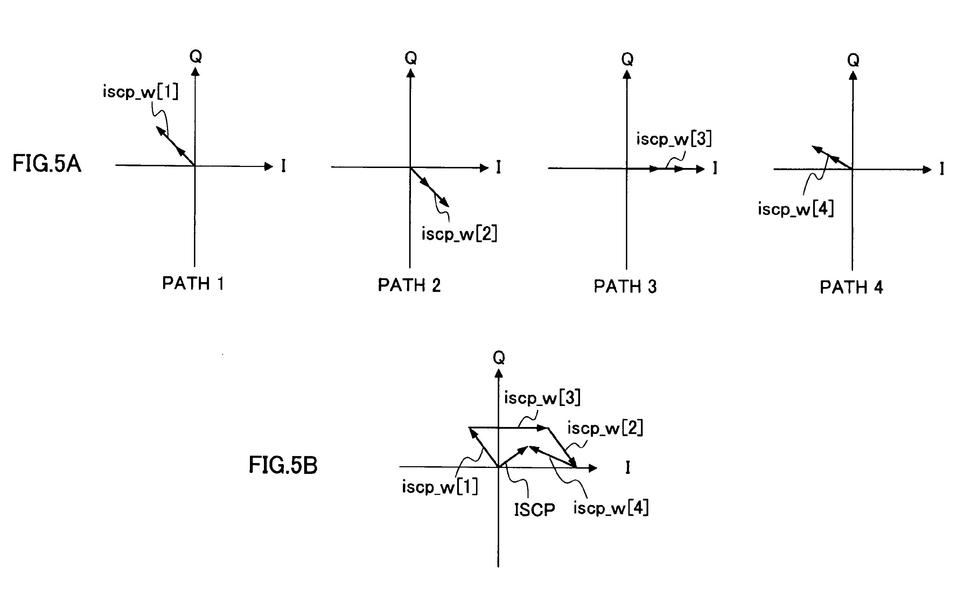

In the present embodiment, the ISCP of a path is weighted by the proportion of the RSCP of the path in the total RSCP and the ISCPs of all paths are combined. FIG. 5A shows the vectors of the weighted ISCPs of the paths shown in FIG. 4B. As shown in FIG. 5A, the weighted ISCP vectors match the RSCP vectors in amplitude.

FIG. 5B shows the combined state of the weighted ISCP vectors of the paths shown in FIG. 5A. As is apparent from FIG. 5B, the noise components are suppressed by adding the vectors (in-phase), and highly accurate ISCP measurement can be performed the same as in the case of the ISCP measurement after RAKE combining.

As described above, according to the present invention, the ISCP of a path is multiplied by a weight that is proportional to the RSCP of the path. Thereby, the contribution of the ISCP calculated for a low reliable path with smaller RSCP than other paths to the total ISCP measurement can be diminished. Therefore, the invented method can suppress variation in ISCP measurements and can enhance the reliability of the ISCP measurements.

Furthermore, by weighting noise vectors before calculating variance and adding the vectors (in-phase), this method suppresses noise components. Therefore, this method can take accurate ISCP measurements with a short averaging time on the accuracy level comparable to the measurement after RAKE combining.

The present invention is not limited to the embodiment described hereinbefore and may be embodied in other modified forms. For example, the number of paths for which this SIR measurement can be performed is not so limited as in the above embodiment. Also, the aforementioned equations and parameters used for the calculations are not so limited.

The radio receiver of the present invention can be installed in radio base stations and communication terminal devices in digital radio communications systems, especially, CDMA systems. This radio receiver enables highly accurate SIR measurement and optimum TPC. Therefore, interference impacts on the system can be reduced and system capacity can be increased.

As is obvious from the above description, the method according to the present invention suppresses noise components by vector-adding interference power components and enables ISCP and SIR measurements at a high accuracy. Thus, SIR measurement performance variation due to variable path search performance and propagation paths can be suppressed and optimum TPC can be performed. Consequently, interference impacts on the system can be reduced and system capacity can be increased.

The present application claims priority from Japanese application JP 2002-301524 filed on October 16, 2002, the contents of which are hereby incorporated by reference into this application.

Industrial Applicability

The preset invention is suitable for use as a radio receiver apparatus which is used in digital radio communications systems.

**Claims**

1. A radio receiver apparatus comprising:

an averaging section that averages received known symbols per path across a plurality of slots;

a desired signal power calculation section that calculates desired signal power per path using averaged known symbol;

a subtraction section that calculates a deviation of said received known symbol from said averaged known symbol per path;

a weighting control section that performs weight control on said deviation per path;

an interference signal power calculation section that calculates interference signal power by adding a vector using the weight-controlled deviation; and

a desired signal power to interference signal power ratio calculation section that calculates a ratio of desired signal power to interference signal power using desired signal power and interference signal power.

2. The radio receiver apparatus according to claim 1, wherein said weighting control section uses the desired signal power per path as a weight factor.

3. A radio base station apparatus equipped with a radio receiver apparatus, said radio receiver apparatus comprising:

an averaging section that averages received known symbols per path across a plurality of slots;

a desired signal power calculation section that calculates desired signal power per path using averaged known symbol;

a subtraction section that calculates a deviation of said received known symbol from said averaged known symbol per path;

a weighting control section that performs weight control on said deviation per path;

an interference signal power calculation section that calculates interference signal power by adding a vector using the weight-controlled deviation; and

a desired signal power to interference signal power ratio calculation section that calculates a ratio of desired signal power to interference signal power using desired signal power and interference signal power.

4. A communication terminal apparatus equipped with a radio receiver apparatus, said radio receiver apparatus comprising:

an averaging section that averages received known symbols per path across a plurality of slots;

a desired signal power calculation section that calculates desired signal power per path using averaged known symbol;

a subtraction section that calculates a deviation of said received known symbol from said averaged known symbol per path;

a weighting control section that performs weight control on said deviation per path;

an interference signal power calculation section that calculates interference signal power by adding a vector using the weight-controlled deviation; and

a desired signal power to interference signal power ratio calculation section that calculates a ratio of desired signal power to interference signal power using desired signal power and interference signal power.

5. An SIR calculation method comprising the steps of:

averaging received known symbols per path across a plurality of slots;

calculating desired signal power per path using averaged known symbol;

calculating a deviation of said received known symbol from said averaged known symbol per path;

performing weight control on said deviation per path; and

calculating interference signal power by adding a vector using the weight-controlled deviation; and

6. The SIR calculation method according to claim 5, wherein said step of weight control uses the desired signal per path as a weight factor.

FIG.1

FIG.2

FIG.3

EP 1 553 707 A1

FIG.4A

PATH 1    PATH 2    PATH 3    PATH 4

FIG.4B

PATH 1    PATH 2    PATH 3    PATH 4

EP 1 553 707 A1

EP 1 553 707 A1

FIG.5A

iscp_w[1]

Q

I

PATH 1

Q

iscp_w[2]

I

PATH 2

Q

iscp_w[3]

I

PATH 3

Q

iscp_w[4]

I

PATH 4

FIG.5B

Q

iscp_w[3]

iscp_w[2]

I

iscp_w[1]

ISCP

iscp_w[4]

## EP 1 553 707 A1

### INTERNATIONAL SEARCH REPORT

| | International application No. |
|---|---|
| | PCT/JP03/10393 |

**A. CLASSIFICATION OF SUBJECT MATTER**
Int.Cl$^7$ H04B1/707, H04B7/26

According to International Patent Classification (IPC) or to both national classification and IPC

**B. FIELDS SEARCHED**

Minimum documentation searched (classification system followed by classification symbols)
Int.Cl$^7$ H04B1/69-1/713, H04J13/00-13/06, H04B7/26

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| E,A | JP 2003-152599 A (Matsushita Electric Industrial Co., Ltd.), 23 May, 2003 (23.05.03), Fig. 7; Par. Nos. [0103], [0120], [0124] (Family: none) | 1-6 |
| E,A | JP 2003-115783 A (Matsushita Electric Industrial Co., Ltd.), 18 April, 2003 (18.04.03), Fig. 6; Par. Nos. [0102], [0107] (Family: none) | 1-6 |
| E,A | JP 2002-344383 A (Matsushita Electric Industrial Co., Ltd.), 29 November, 2002 (29.11.02), Full text (Family: none) | 1-6 |

☒ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 17 September, 2003 (17.09.03) | 30 September, 2003 (30.09.03) |

| Name and mailing address of the ISA/<br>Japanese Patent Office | Authorized officer |
|---|---|
| Facsimile No. | Telephone No. |

Form PCT/ISA/210 (second sheet) (July 1998)

EP 1 553 707 A1

INTERNATIONAL SEARCH REPORT

International application No.

PCT/JP03/10393

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2000-236296 A  (Oki Electric Industry Co., Ltd.), 29 August, 2000 (29.08.00), Full text (Family: none) | 1-6 |
| A | JP 2000-252863 A  (Mitsubishi Electric Corp.), 14 September, 2000 (14.09.00), Par. Nos. [0051] to [0056] (Family: none) | 1-6 |

Form PCT/ISA/210 (continuation of second sheet) (July 1998)

16